(19) Europäisches Patentamt
European Patent Office
Office européen des brevets

(11) EP 0 573 024 B2

(12) NEUE EUROPÄISCHE PATENTSCHRIFT

(45) Veröffentlichungstag und Bekanntmachung des Hinweises auf die Entscheidung über den Einspruch:
**13.10.2004 Patentblatt 2004/42**

(45) Hinweis auf die Patenterteilung:
**26.08.1998 Patentblatt 1998/35**

(21) Anmeldenummer: **93108890.0**

(22) Anmeldetag: **02.06.1993**

(51) Int Cl.[7]: **C08G 63/06**, C08G 63/08, A61K 9/22

(54) **Verfahren zur Herstellung biologisch abbaubarer Polyester**

Process for the preparation of biodegradable polyester

Procédé pour la préparation de polyester biodégradable

(84) Benannte Vertragsstaaten:
**BE CH DE FR GB IT LI NL SE**

(30) Priorität: **02.06.1992 DE 4218510**

(43) Veröffentlichungstag der Anmeldung:
**08.12.1993 Patentblatt 1993/49**

(73) Patentinhaber: **PHARMATECH GmbH**
**24220 Flintbek (DE)**

(72) Erfinder:
- **Rafler, Gerald, Dr.**
  **D-1580 Potsdam (DE)**
- **Müller, Bernd, Prof. Dr.**
  **D-24220 Flintbek (DE)**

(74) Vertreter: **UEXKÜLL & STOLBERG**
**Patentanwälte**
**Beselerstrasse 4**
**22607 Hamburg (DE)**

(56) Entgegenhaltungen:
**US-A- 4 510 295** **US-A- 4 559 945**
**US-A- 5 028 667**

- **Jacobs et al., Macromolecules, Vol. 24, No. 11, 3028-3034 (1991)**
- **Kurcok et al., Macromolecules, Vol. 25, No. 9, 2285-2289 (1992)**
- **Flory, Principles of Polymer Chemistry, 1953, pp. 86-89**
- **Bodmeier et al., International J. of Pharmaceutics, 51; 1-8 (1989)**
- **Chawla et al., Biomat., Med. Dev. Art. Org., 13 (3+4), 153-162 (1985-6)**
- **Holland et al., J of Controlled Release, 4; 155-180 (1986)**
- **Gogolewski et al., J. of Applied Polymer Science, Vol. 28; 1045-1061 (1983)**
- **Asano et al., Drug Design and Delivery, Vol. 5; 301-320 (1990)**
- **Jacobs et al: Macromolecules, Vol. 24, No. 11, 3028-3034 (1991)**
- **Flory: Principles of Polymer Chemistry, 1953, pp. 86-89**
- **Bodmeier et al: International J. of Pharmaceutics, 51; 1-8 (1989)**
- **Chawla et al: Biomat., Med. Dev. Art. Org., 13 (3+4), 153-162 (1985-6)**
- **Holland et al: J of Controlled Release, 4; 155-180 (1986)**
- **Kurcok et al: Macromolecules, Vol. 25, No. 9, 2285-2289 (1992)**
- **Gogolewski et al: J. of Applied Polymer Science, Vol. 28; 1045-1061 (1983)**
- **Asano et al: Drug Design and Delivery, Vol. 5; 301-320 (1990)**

Bemerkungen:
Die Akte enthält technische Angaben, die nach dem Eingang der Anmeldung eingereicht wurden und die nicht in dieser Patentschrift enthalten sind.

EP 0 573 024 B2

## Beschreibung

Die Erfindung betrifft ein Verfahren zur Herstellung biologisch abbaubarer Block-Copolyester durch Umsetzung von Homo- und/oder Copolyestern. Die auf diese Weise hergestellten Copolymere eignen sich insbesondere als biologisch abbaubare Trägermaterialien in parenteralen Arzneistoffabgabesystemen mit retardierter bzw. kontrollierter Wirkstofffreisetzung in der Human- und Veterinärmedizin.

Die Erfindung betrifft weiterhin biologisch abbaubare Blockcopolyester bestehend aus α-Hydroxycarbonsäuren, die gemäß dem erfindungsgemäßen Verfahren herstellbar sind.

Der Einsatz biologisch abbaubarer Polyester in speziellen Arzneistoffabgabesystemen wird vor allem durch ihr in vivo Freisetzungs- und Resorptionsverhalten bestimmt. Beides hängt für einen gegebenen Wirkstoff in komplexer Weise von der chemischen Struktur, der Molmasse und ihrer Verteilung sowie der Morphologie des Polymeren ab.

Es ist bekannt, daß vor allem Homo- und Copolyester der Milch-und der Glykolsäure als polymere Matrixmaterialien in Depotarzneimitteln für Peptide, Steroide und Antibiotika eingesetzt werden können (R. Jalil, J.R. Nixon: *J. Microencapsulation* 7 (1990) 297 bis 325). Parenterale Abgabesysteme, die den Wirkstoff über einen längeren Zeitraum mit nahezu konstanter Geschwindigkeit freisetzen, enthalten vor allem statistische Poly(glycolid-co-lactid)e unterschiedlicher Comonomerzusammensetzung, wobei die äquimolar zusammengesetzten Copolymeren am ehesten die therapeutischen Anforderungen zum parallelen Verlauf von Wirkstofffreisetzung und Resorption der polymeren Matrix im Körper erfüllen. (J. Dahlmann, G. Rafler, K. Fechner, B. Mehlis: *Brit. Polymer J*. 23 (1990) 235 bis 240).

Diese bekannten statistischen Homo- und Copolyester von α-Hy-droxycarbonsäuren werden durch Ringöffnungspolymerisation ihrer cyclischen Diester hergestellt. Solche Polymerisationsverfahren werden beispielsweise in DE-PS 2 257 334 und DE-PS 2 827 289 beschrieben. Niedermolekulare Polyester von α-Hydroxycarbonsäuren können außer durch Ringöffnungspolymerisation auch durch Vakuumschmelzpolykondensation synthetisiert werden (US-PS 4 677 191).

In der DE-PS 3 430 852 werden Matrixmaterialien beschrieben, die auf Basis von Terpolyestern entwickelt wurden. Als Drittkomponente enthalten diese Terpolyester neben Glykol- und Milchsäure Mono- bzw. Oligosaccharide oder höherfunktionelle Alkohole mit bis zu sechs Hydroxylgruppen.

Sowohl die durch Ringöffnungspolymerisation als auch die durch Polykondensation synthetisierten Co- oder Terpolyester sind hinsichtlich der Verteilung der Kettenbausteine statistisch aufgebaut. Statistisch aufgebaute aliphatische Copolyester in dem für die pharmazeutische Applikation geeigneten Zusammensetzungsbereich, der für die Copolymere zumeist nahe der Äquimolarität liegt, sind jedoch amorph (D.K. Gilding und A.M.Reed: Polmer 20 (1979) 1459). Der amorphe Charakter dieser Polymeren bringt eine Reihe aufarbeitungs- und verarbeitungstechnischer Probleme mit sich, wie erschwerte Entmonomerisierung durch Extraktion, Verkleben beim Lagern, mangelnde Stabilität von aus diesen Polymeren hergestellten Arzneiformen (monolithische Implantate, Mikropartikel), die nur mit teilkristallinen Polymeren dieses Typs zu vermeiden sind. Teilkristalline Poly-(glycolid-co-lactid)e mit statischer Monomerverteilung erhält man jedoch erst bei Glycolidanteilen von über 75 Mol%. Polymere mit so hohen Glykolsäureanteilen können jedoch aufgrund ihres Löslichkeitsverhaltens nicht mehr aus den üblichen Lösungsmitteln verformt werden. Hohe Glykolsäureanteile bedingen nach den bekannten Struktur-Eigenschaftsbeziehungen für diese biologisch abbaubaren Polymeren (vgl. J. Dahlmann, G. Rafler, K. Fechner und B. Mehlis: Brit. Polymer J. 23 (1990) 235) auch rascheren Abbau des Polymeren, und damit sind diese glycolidreicheren Copolyester auch für Langzeitabgabesysteme nicht geeignet.

Ein spezieller Typ von statistischen Copolyestern sind die aus EP-A-0 272 902 bekannten Polylactide, die in Form eines physikalischen Netzwerkes vorliegen und deshalb auch als sogenannte "interpenetrating networks" bezeichnet werden. Die aus Poly-L-und Poly-D-lactid erzeugten Copolyester zeichnen sich durch ein besonderes thermisches Verhalten gegenüber dem Racemat (Poly-D,L-lactid) aus.

Die Eigenschaften statistischer Copolymere werden vor allem durch die Monomeranteile und in wesentlich geringerem Umfang durch die Molmasse determiniert. Bei der Entwicklung von Polymeren, die dem Pharmakon und der jeweiligen Indikation optimal angepaßt sind, ist man damit auf die Variierung der Zusammensetzung eingegrenzt. Die Herstellung unterschiedlich zusammengesetzter Poly(glycolid-co-lactid)e bedeutet jedoch auch immer eine Änderung der Synthesetechnologie, da sich die Monomeren in ihrer Reaktivität und die gebildeten Copolymeren in ihrem Schmelzverhalten sehr stark unterscheiden. Diese Änderungen betreffen beispielsweise die Prozeßtemperatur und die Prozeßdauer. Diese Prozeßparameter wiederum beeinflussen nicht nur die Ringöffnungspolymerisation der cyclischen Diester, sondern in erheblichem Umfang auch unerwünschte Nebenreaktionen der gebildeten Polyester und damit zwangsläufig auch unerwünschte Nebenprodukte, die unter zusätzlichem Aufwand aus den Polymeren abgetrennt werden müssen.

Die verarbeitungstechnischen und applikativen Nachteile der Homo- bzw. statistischen Copolymeren lassen sich auch nicht durch den Einsatz von Mischungen beseitigen (vgl. beispielsweise EP-PS 58 481), da durch die Mischung die dominanten, molekular determinierten chemischen und physikalischen Eigenschaften, wie Reaktivität, Stabilität, Löslichkeit oder Kristallinität nicht beeinflußt werden.

Schließlich sind auch als biologisch abbaubar bezeichnete Blockcopolyester bekannt, die jedoch alle nicht-abbaubare Cokomponenten enthalten, wie z.B. Polyalkylenoxide. Bei den polyalkylenoxidhaltigen Block-Copolymeren wird der Polyalkylenoxidrest als praktisch unreaktives Molekülsegment entweder als Coinintiator (US-PS 4 452 973) oder aber über Endgruppenverknüpfung (US-PS 4 438 253) in das Makromolekül eingeführt. In der DD-PS 140 982 werden Zweiblock-Copolymere beschrieben, die durch getrennte Monomerdosierung hergestellt wurden. Dabei wird zuerst das eine Copolymere auspolymerisiert (Dilactid) und dann dem Polymerisationsansatz das zweite Copolymere zugegeben.

Blockcopolymere können auch aus polymeren Ausgangsmaterialien hergestellt werden, indem diese über eigene reaktive Endgruppen oder mittels hochaktiver bifunktioneller Comonomere, z.B. Diisocyanate oder Bisepoxide, miteinander verknüpft werden. Polymere dieses Typs werden beispielsweise gemäß EP-A-0 108 912 unter Verwendung von Polyalkylenoxiden als Comonomer und gemäß DE-OS 2 849 785 durch Endgruppenverknüpfung über aromatische Dicarbonsäureeinheiten hergestellt. Das bedeutet, daß die Struktureinheiten derartiger Blockcopolymere nicht nur über Esterbindungen miteinander verbunden sind, was die Abbaubarkeit negativ beeinflußt oder zur Bildung toxikologisch bedenklicher Substanzen beim Abbau führen kann.

Aufgabe der Erfindung ist die Entwicklung eines Verfahrens zur Herstellung biologisch abbaubarer Blockcopolymere, bei dem von polymeren Estern ausgegangen werden kann, die in technisch einfacher Weise, insbesondere ohne Zuhilfenahme reaktiver Endgruppen oder hochaktiver Comonomere, zu den gewünschten Produkten umgesetzt werden können. Das Verfahren soll insbesondere die Herstellung biologisch abbaubarer Blockcopolyester von α-, β- bzw. ω-Hydroxycarbonsäuren mit gezielt beeinflußbarer Blocklänge aus Homo- und/oder Copolyestern unterschiedlicher molarer Zusammensetzung und/oder unterschiedlicher mittlerer Molmasse ohne Zusatz von kettenverknüpfenden Komponenten erlauben.

Weitere Aufgabe der Erfindung ist die Herstellung biologisch abbaubarer Blockpolymere, die die oben genannten Nachteile bekannter Polymere nicht zeigen.

Unter "biologisch abbaubar" ist im Zusammenhang mit der biomedizinischen Applikation von Polymeren die Biokompatibilität der Polymeren und ihrer Abbauprodukte sowie die vollständige Resorbierbarkeit des Polymeren in einem überschaubaren Zeitraum von einigen Tagen bis zu einigen Monaten zu verstehen. Die erfindungsgemäß als Ausgangsstoffe eingesetzten aliphatischen Homo- und Copolyester weisen sowohl die erforderliche Biokompatibilität als auch die rückstandsfreie Resorbierbarkeit auf, wie umfangreiche klinische Studien sowie der jahrelange erfolgreiche Einsatz bei den resorbierbaren chirurgischen Nahtmaterialien gezeigt haben.

Es zeigte sich, daß die erfindungsgemäßen Blockcopolymere aus α-Hydroxycarbonsäuren in einfacher Weise dadurch herstellbar sind, daß zwei oder mehrere unterschiedliche biologisch abbaubare Homo- und/oder Copolyester ohne Zusatz kettenverknüpfender Substanzen in der Schmelze und unter Inertgasatmosphäre durch Mischen für 15 Minuten bis zu 5 Stunden miteinander umgesetzt werden.

Hierbei reagieren offenbar überraschenderweise die verschiedenen Polyester-Ausgangsmaterialien über die kettenverknüpfenden Estergruppen unter teilweisem Kettenaustausch. Die Bildung der Blockcopolyester sowie der durch Gleichung 1 am Beispiel von bevorzugten Ausgangsmaterialien wiedergegebene Verlauf der Reaktion wurden in bekannter Weise mittels $^{13}$C-NMR Spektroskopie und Differentialthermoanalyse verfolgt und verifiziert.

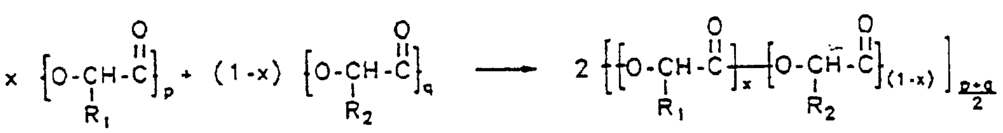

(1)

$R_1$, $R_2$ = H, $C_1$ bis $C_6$ Alkyl, insbesondere $C_1$ bis $C_2$; $R_1 \neq R_2$

Mit dem erfindungsgemäßen Verfahren lassen sich verschiedene Homopolyester, Homopolyester mit Copolyestern oder mehrere Copolyester unterschiedlicher Zusammensetzung miteinander zu Blockcopolymeren umsetzen. Die Copolyester können dabei aus den gleichen Monomerbausteinen aufgebaut sein und eine statistische oder eine nicht-statistische Verteilung der Monomerbausteine aufweisen. Dabei ist es bevorzugt, daß mindestens ein Copolyester eingesetzt wird. Es hat sich nämlich gezeigt, daß es durch die Verwendung von Copolyestern möglich ist, die Reaktionsbedingungen milder zu gestalten. So sind bei der Umsetzung von Poly(glycolid-co-lactid)en zu dem Blockcopolyester Poly-b-(glycolid-co-lactid) mit einem Lactidgehalt von 50 bis 75 Mol% lediglich 1 bis 2 Stunden bei 170 bis 180°C, hingegen bei Einsatz der entsprechenden Homopolyester 3 bis 5 Stunden Reaktionsdauer bei gleicher Temperatur erforderlich. Besonders bevorzugt werden daher auch mindestens zwei unterschiedliche Copolyester umgesetzt, die sich durch die Art der Monomerbausteine oder bei identischen Monomerbausteinen durch ein abweichendes stöchiometrisches Verhältnis der Monomeren voneinander unterscheiden.

Weiter sind solche Homo- und Copolyester als Ausgangsmaterialien bevorzugt, die nur aus Ester-Struktureinheiten aufgebaut sind. Das heißt, sie weisen im wesentlichen keine Fremdeinheiten wie Polyalkylenketten oder Ether- oder Amidbindungen auf, wie sie bei herkömmlichen Polymeren durch Einsatz reaktiver Endgruppen oder hochaktiver Comonomere vorhanden sein können.

Der Anteil einer Ausgangskomponente am Reaktionsgemisch liegt vorzugsweise im Bereich von 5 bis 95 Mol%.

Das erfindungsgemäße Verfahren gestattet die Herstellung von biologisch abbaubaren aliphatischen Blockcopolyester in beliebiger Copolymerzusammensetzung. Besonders geeignet ist das beschriebene Verfahren jedoch zur Herstellung von Poly(glycolid-co-lactid)en, Poly((2-hydroxy)essigsäure-co-(3-hydroxy)buttersäure)n sowie Poly((2-hydroxy)essigsäure-co-(6-hydroxy)-capronsäure(n), da die eingesetzten Homo- und Copolymeren kommerziell zugänglich sind und klinisch weitestgehend ausgetestet wurden.

Die Umsetzung der verwendeten Homo- und/oder Copolyester findet vorzugsweise bei Temperaturen von 130 bis 230°C, besonders bevorzugt bei 150 bis 210°C und ganz besonders bevorzugt bei 170 bis 180°C statt.

Der Umsetzung kann problemlos in geschlossenen bzw. quasi geschlossenen Systemen durchgeführt werden, da keine flüchtigen Reaktionsprodukte abgespalten werden, die aus dem Reaktionsraum abgeführt werden müssen. Der Prozeß kann diskontinuierlich in Rührreaktoren oder Knetmaschinen bei Reaktionszeiten von vorzugsweise 1 bis maximal 5 Stunden oder kontinuierlich in entsprechenden Zweischneckenextrudern durchgeführt werden, wobei die mittlere Verweilzeit pro Substanzdurchlauf 15 bis vorzugsweise 90 min beträgt.

Die Blocklänge der einzelnen Polyesterblöcke kann durch die angewandten Prozeßparameter wie Temperatur, Zeit und Mischungsintensität gezielt eingestellt werden. Bei gegebener Temperatur und Durchmischungsintensität ist die Blocklänge eine Funktion der Reaktionsdauer. Bei genügend langer Dauer werden die Blockcopolymeren in die statistischen Copolyester umgewandelt, wie sie auch bei der direkten Synthese aus den Monomeren erhalten werden. Durch Untersuchung des Reaktionsgemisches mittels NMR-Spektroskopie und Differentialthermoanalyse ist es möglich, die Verfahrensparameter so zu wählen, daß gegebene Ausgangsmaterialien zu Blockcopolyestem mit gewünschter Blocklänge umgewandelt werden.

Bei galenisch genutzten Blockcopolyestern, die üblicherweise ein mittleres Molekulargewicht von 15.000 bis 30.000 aufweisen, haben sich Blocklängen von 3.000 bis 5.000 entsprechend einer Blockanzahl von 3 bis 10 als günstig erwiesen. Die im medizintechnischen Bereich eingesetzten Blockcopolyester haben Blocklängen von insbesondere ungefähr 10.000 bis 15.000, so daß bei gleicher Blockanzahl zu ihrer Herstellung höhermolekulare Ausgangsmaterialien eingesetzt werden müssen.

Die mittleren Molmassen der Block-Copolymeren entsprechen den Molmassenanteilen der zugrundeliegenden Komponenten, da die mittlere Zahl der Monomereinheiten pro Makromolekül nicht geändert wird, sondern nur ihre Anordnung in den Ketten (Gleichung (2)).

$$\overline{M}_n^c = \sum x_i * \overline{M}_n^p \qquad (2)$$

$\overline{M}^c_n$: mittlere Molmasse des Blockcopolymeren
$\overline{M}^p_n$: mittlere Molmasse der Ausgangspolymeren
$x_i$: Molenbruch der Komponente i.

Eine Reduzierung der Molmasse erfolgt bei entsprechender Wahl der Reaktionsbedingungen, d.h. beim Arbeiten in einem geschlossenen System unter einem Inertgasdruck bis etwa 10 kPa, nicht. Durch Erhöhen der Reaktionstemperatur und Arbeiten in einem offenen System kann jedoch parallel zur Blockcopolymerbildung die Molmasse des gebildeten Blockcopolymeren reduziert werden. Die Molmassenreduzierung kann durch Zusatz physiologisch unbedenklicher Verbindungen, wie z.B. α-Hydroxycarbonsäuren, z.B. Glykol- oder Milchsäure, gezielt verstärkt werden. Auch der gezielte Abbau der mittleren Molmassen durch die genannten biokompatiblen Substanzen läßt sich mit Gleichung (2) quantitativ erfassen.

Die nach dem erfindungsgemäßen Verfahren aus α-Hydroxycarbonsäuren hergestellten Blockcopolyester und insbesondere die bevorzugten Blockcopolyester mit einer Zusammensetzung gemäß Formel (3) für binäre und Formel (4) für Mehrkomponentensysteme sind neu und auf dem Wege herkömmlicher Verfahren nicht zugänglich. Sie unterscheiden sich, auch bei evtl. formeller Übereinstimmung der Bruttozusammensetzungen mit den auf herkömmlichem Wege erhaltenen Polymeren, aufgrund ihrer andersartigen mikrochemischen Struktur in ihren physikalischen, verarbeitungstechnischen und applikativen Eigenschaften und weisen vorzugsweise eine Löslichkeit von 50 g/l in halogenierten Kohlenwasserstoffen und/oder Dimethylformamid und/oder Dimethylacetamid auf.

Beispielsweise ist erfindungsgemäß hergestelltes Poly-b-(glyco-lid(50)-co-lactid(50)) nicht amorph wie statistisches Poly-(glycolid(50)-co-lactid(50)), sondern teilkristallin, d.h. es zeigt kein Kleben und Erweichen der Oberfläche und ist gut zu verarbeiten.

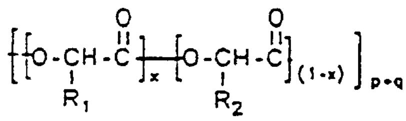

(3)

mit

| | |
|---|---|
| $R_1$, $R_2$ = | H, $C_1$ bis $C_6$ Alkyl, insbesondere $C_1$ oder $C_2$; |
| $R_1 \neq R_2$; | $0.05 \leq x \leq 0.95$; $10 \leq p \leq 1000$; $10 \leq q \leq 1000$; |

Die Indizes p und q können den gleichen Wert aufweisen, im allgemeinen sind sie jedoch verschieden.

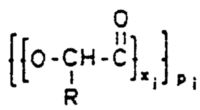

(4)

mit

| | |
|---|---|
| R = | H, $C_1$ bis $C_6$ Alkyl, insbesondere $C_1$oder $C_2$; |
| $x_i$: | molarer Anteil der Komponente i |
| $p_i$: | Zahl der Monomerbausteine der Komponente i |

Das erfindungsgemäße Verfahren erlaubt damit erstmals die Herstellung von biologisch abbaubaren Block-Copolymerestern aus Homo- und Copolyestern beliebiger Sequenzlänge und in beliebiger Zusammensetzung auf technologisch sehr einfache Weise durch Reaktion von polymeren Estern in schmelzflüssiger Phase. Daß mittels einer solchen Verfahrensweise Blockcopolymere hergestellt werden können, ist bisher noch nicht bekannt geworden. Umso überraschender ist es, daß die erfindungsgemäßen speziellen biologisch abbaubaren Blockcopolyester aus α-Hyolroxycarbonsäuren durch dieses Verfahren gewonnen werden können.

Die erfindungsgemäße Verfahrensweise erlaubt durch die Erweiterung der bekannten Anpassungsparameter für biologisch abbaubaren Copolyester, nämlich Monomerzusammensetzung und Molmasse, um Sequenzlänge eine der jeweiligen Applikation optimale Anpassung. Hierdurch lassen sich beispielsweise die an sich amorphen Poly(glycolidco-lactid)e mit D,L- bzw. L,L-Dilactidanteilen über 40 Mol% in teilkristalliner Form mit allen daraus resultierenden Vorteilen herstellen. Ein besonderer Vorzug der vorgeschlagenen Verfahrensweise ist die Möglichkeit des Einsatzes von klinisch erprobten Polymeren zur Herstellung dieser Blockcopolyester.

Die erfindungsgemäßen Blockcopolymere eignen sich insbesondere als biologisch abbaubare Trägermaterialien in parenteralen Arzneistoffabgabesystemen mit retardierter bzw. kontrollierter Wirkstofffreisetzung in der Human- und Veterinärmedizin.

Im folgenden wird die Erfindung anhand von Beispielen erläutert.

Beispiel 1 (vergleichsbeispiel)

Poly(glycolid(50)-co-lactid (50) (statistische Anordnung der Comonomeren)

14,4 g L,L-Dilactid und 11,6 g Diglycolid werden in Gegenwart von $10^{-4}$ Mol/Mol Zinn-11-octonoat bei 180°C unter Rühren und unter Inertgasatmosphäre Bh copolymerisiert. Nach 4h wird die Polymerisation durch Abkühlen beendet, das Polymere aus dem Reaktionsgefäß entnommen, mit Methanol im Soxhlet zur Abtrennung der unumgesetzten Monomeren extrahiert und anschließend im Vakuum konstant getrocknet. Der statistische Copolyester ist ein amorphes Material von weicher Konsistenz, das auch nach Behandeln mit flüssigem Stickstoff seine schwierige Aufarbeitbarkeit nicht verliert. Das erhaltene statistische Copolymere wird hinsichtlich relativer Lösungsviskosität (LV) einer 0,5%igen Lösung in Dimethylformamid (DMF), Monomerzusammensetzung und seiner thermischen Eigenschaften charakterisiert.

| | |
|---|---|
| relative Lösungsviskosität $\eta_{re1}$ | 1,35 (0,5%ige Lösung in DMF) Zusammensetzung |

(fortgesetzt)

| | |
|---|---|
| präparativ | 50 Mol% L,L-Dilactid<br>50 Mol% Diglycolid |
| NMR-spektroskopisch | 48 Mol% L-Lactideinheiten<br>52 Mol% Glycolideinheiten |
| Glasübergangstemperatur | 52°C |
| Erweichungsbereich | 78-88°C |

Beispiel 2

Poly-b-(glycolid(50)-co-L-lactid(50)) (Blockanordnung der Comonomeren)

11,6 g Polyglycolid werden mit 14,4 g Poly-L-lactid unter Inertgasatmosphäre auf 210°C erhitzt. Die Polyesterschmelze wird mit einem Schneckenrührer intensiv durchmischt. Nach einer Umesterungszeit von 2h wird die Reaktion beendet und der Copolyester entsprechend Beispiel 1 aufgearbeitet. Der Blockcopolyester ist ein teilkristallines Material von harter Konsistenz, das sich beispielsweise problemlos bei Raumtemperatur mahlen und sieben läßt. Der unter den angegebenen Bedingungen synthetisierte äquimolare zusammengesetzte Blockcopolyester ist in DMF unlöslich. Die Bestimmung der LV ist nur in dem wesentlich aktiverem Lösungsmittel Hexafluorisopropanol (HFIP) möglich.

| | |
|---|---|
| relative Lösungsviskosität $\eta_{re1}$ | 1,45 (0,5%ige Lösung in HFIP) Zusammensetzung |
| präparativ | 50 Mol% Poly-L-lactid 50<br>Mol% Polyglycolid |
| NMR-spektroskopisch | 49 Mol% L-Lactideinheiten 51<br>Mol% Glycolideinheiten |
| Glasübergangstemperatur | 52°C |
| Schmelztemperatur | 174°C |

Beispiel 3

Poly-b-(glycolid(50)-co-D,L-lactid(50)) (Blockanordnung der Comonomeren)

11,6 g Polyglycolid werden mit 14,4 g Poly-D,L-lactid entsprechend Beispiel 2 umgesetzt und aufgearbeitet. Der Blockcopolyester ist ein teilkristallines Material von harter Konsistenz, das in seinem chemischen und physikalischen Verhalten weitgehend dem L-lactidhaltigem Blockcopolyester (Beispiel 2) entspricht.

| | |
|---|---|
| relative Lösungsviskosität $\eta_{re1}$ | 1,40 (0,5%ige Lösung in HFIP) Zusammensetzung |
| präparativ | 50 Mol% Poly-D,L-lactid<br>50 Mol% Polyglycolid |
| NMR-spektroskopisch | 48 Mol% D,L-Lactideinheiten<br>52 Mol% Glycolideinheiten |
| Glasübergangstemperatur | 48°C |
| Schmelzbereich | 150-160°C |

Beispiel 4:

Poly-b-(glycolid(45)-co-lactid (55)

11,9 g Poly(glycolid(90)-co-L-lactid(10)) (PGLLA) mit einer relativen Lösungsviskosität von $\eta_{re1}$ = 1,16 (0,5%ige Lösung in DMF) werden mit 14,4 g Poly-L-lactid einer relativen Lösungsviskosität von $\eta_{re1}$ = 2,16 (0,5%ige Lösung in DMF) unter Inertgas in einem offenen System bei 180°C intensiv mit einem geschraubten Blattrührer durchmischt. Die Bildung des Blockcopolymeren führt zu charakteristischen Änderungen der Kristallisations- und Schmelztemperaturen (Tabellen 1 und 2), wobei die leicht abnehmende Tendenz Ausdruck des wachsenden Anteils statistischer Kettensegmente ist. Die Indizes 1 in Tabelle 2 sind den L-Lac-tidsegmenten, die Indizes 2 den glycolidreichen Kettensegmenten zuzuordnen.

Bei den gewählten Reaktionsbedingungen erfolgt keine Reduzierung der mittleren Molmasse über das mischungsbedingte Ausmaß hinaus, wie der Verlauf der relativen Lösungsviskositäten mit der Zeit in (Tabelle 3) zeigt.

Tabelle 1

| Kristallisations-($T_K$) und Schmelztemperaturen ($T_M$) der Ausgangspolymeren | | |
|---|---|---|
| Polyester | $T_K$ [°C] | $T_M$ [°C] |
| PLLA | 108 | 180 |
| PGLLA (90/10) | 89 | 200 |

Tabelle 2

| Kristallisations- und Schmelztemperaturen der Block-copolymeren in Abhängigkeit von der Reaktionszeit | | | | |
|---|---|---|---|---|
| Reaktionszeit [h] | $T_{K_1}$ [°C] | $T_{K_2}$ [°C] | $T_{M_1}$ [°C] | $T_{M_2}$ [°C] |
| 0 | 108 | 89 | 180 | 200 |
| 1 | 98 | 83 | 178 | 191 |
| 2 | 97 | 81 | 178 | 189 |
| 3 | 98 | 77 | 177 | -- |
| 4 | 95 | 74 | 177 | -- |
| 5 | 94 | -- | 175 | -- |
| 6 | 92 | -- | 172 | -- |

Tabelle 3

| Relative Lösungsviskositäten der Blockcopolymeren in Abhängigkeit von der Reaktionszeit | | |
|---|---|---|
| Reaktionszeit [h] | $\eta_{re1}$ in DMF[1)] | $\eta_{re1}$ in HFIP[1)] |
| 0 | n.l. | 1,35 |
| 1 | n.l. | 1,35 |
| 2 | n.l. | 1,31 |
| 3 | 1,23 | 1,32 |
| 4 | 1,24 | 1,33 |
| 5 | 1,22 | 1,31 |
| 6 | 1,22 | 1,29 |

[1)]: 0,5%ige Lösung; DMF: Dimethylformamid;
HFIP: Hexafluorisopropanol; n.l.: nicht löslich

Beispiel 5:

Poly-b-(glycolid(45)-co-lactid(55))

Entsprechend Beispiel 2 oder 4 wird die Umesterung der Ausgangspolymeren bei 200°C und einem Stickstoffdruck p von 100 kPa durchgeführt. Die Ergebnisse der viskosimetrischen Bestimmungen sind in Tabelle 4 zusammengefaßt. Die chemischen und physikalischen Eigenschaften des bei geringfügig erhöhtem Druck hergestellten Blockcopolyesters entsprechen in vollem Umfang denen des bei Normaldruck synthetisierten.

Tabelle 4

| Relative Lösungsviskosität der Blockcopolymeren in Abhängigkeit von der Reaktionszeit | | |
|---|---|---|
| Reaktionszeit [h] | $\eta_{re1}$ in DMF[1)] | $\eta_{re1}$ in HFIP[1)] |
| 0 | n.l. | 1,35 |
| 1 | n.l. | 1,35 |
| 2 | n.l. | 1,37 |
| 3 | 1,24 | 1,38 |
| 4 | 1,25 | 1,40 |

[1)] 0,5%ige Lösung

Beispiel 6:

Poly-b-(glycolid(50)-co-lactid (50))

61,8 g PGLLA (90/10) mit einer relativen Lösungsviskosität von $\eta_{re1}$ = 1,56 (0,5%ige Lösung in HFIP) werden mit 67,4 g PLLA mit einer relativen Lösungsviskosität von $\eta_{re1}$ = 1,95 (0,5%ige Lösung in Chloroform) und 2,4 g Glykolsäure bei 210°C entsprechend Beispiel 4 umgesetzt. Nach einer Reaktionszeit von 3 Stunden weist eine 0,5%ige Lösung des Blockcopolyesters in Dimethylformamid einen $\eta_{re1}$-Wert von 1,16 auf. Die NMR-spektroskopische Bestimmung der Zusammensetzung ergab einen Lactidgehalt von 52 Mol% und einen Glycolidgehalt von 48 Mol%. Das Block-Copolymerisat weist eine Glasübergangstemperatur von 53°C und eine Schmelztemperatur von 177°C auf.

Beispiel 7:

Poly-b-((2-hydroxy)essig(63)-co-(2-hydroxy)butter(30))säure)

41,6 g PGLLA (90/10) ($\eta_{re1}$ = 1,56) und 65,8 g Poly-(2-hydroxy)buttersäure($\eta_{re1}$ = 2,30, 0,5%ige Lösung in Chloroform) werden bei 210°C entsprechend Beispiel 4 umgesetzt. Nach einer Reaktionszeit von 3 Stunden weist eine 0,5%ige Lösung des ternären Blockcopolyesters in HFIP einen $\eta_{re1}$-Wert von 1,80 auf.

Beispiel 8:

Poly-b-((2-hydroxy)essig(36)-co-(2-hydroxy)propion(4)-co-(6-hydroxy)-capron(60))säure

23,8 g PGLLA (90/10) ($\eta_{re1}$ = 1,56) und 68,4 g Polycaprolacton ($\eta_{re1}$ = 1,90 0,5%ige Lösung in Toluol) werden bei 180°C entsprechend Beispiel 4 umgesetzt. Nach einer Reaktionszeit von 2 Stunden weist eine 0,5%ige Lösung des ternären Blockcopolyesters in DMF einen $\eta_{re1}$-Wert von 1,62 auf.

Beispiel 9

Poly-b-((2-hydroxy)propion(50)-co-(6-hydroxy)capronsäure (50))

56 g Polycaprolacton und 36 g Poly-L-lactid werden bei 180°C analog Beispiel 2 umgesetzt und aufgearbeitet. Die Reaktionszeit beträgt 4h. Der Blockcopolyester ist ein teilkristallines Material von harter Konsistenz, der sich in Chloroform, DMF und Toluol löst und aus diesen Lösungsmitteln auch verarbeiten läßt.

| | |
|---|---|
| relative Lösungsviskosität $\eta_{re1}$ | 2,18 (0,5%ige Lösung in Chloroform) |
| Molmasse | 78700 |
| Zusammensetzung präparativ | 50 Mol% Poly-L-lactid |
| | 50 Mol% Polycaprolacton |
| NMR-spektroskopisch | 52 Mol% Lactideinheiten |
| | 48 Mol% Caproyleinheiten |

(fortgesetzt)

| | |
|---|---|
| Glasübergangstemperatur | 49°C |

**Patentansprüche**

1. Verfahren zur Herstellung biologisch abbaubarer Blockcopolyester, **dadurch gekennzeichnet, daß** zwei oder mehrere unterschiedliche biologisch abbaubare Homo- und/oder Copolyester ohne Zusatz kettenverknüpfender Substanzen in der Schmelze und unter Inertgasatmosphäre durch Mischen für 15 Minuten bis zu 5 Stunden miteinander umgesetzt werden.

2. Verfahren nach Anspruch 1, **dadurch gekennzeichnet, daß** die Homo- und Copolyester in Mengen von jeweils 5 bis 95 Mol%, bezogen auf die gesamte Mischung, eingesetzt werden.

3. Verfahren nach Anspruch 1 oder 2, **dadurch gekennzeichnet, daß** die Homo- und/oder Copolyester bei Temperaturen im Bereich von 130 bis 230°C gemischt werden.

4. Verfahren nach einem der Ansprüche 1 bis 3, **dadurch gekennzeichnet, daß** mindestens ein statistischer oder nichtstatistischer Copolyester eingesetzt wird.

5. Verfahren nach einem der Ansprüche 1 bis 4, **dadurch gekennzeichnet, daß** mindestens zwei unterschiedliche Copolyester umgesetzt werden, die sich durch die Art der Monomerbausteine oder bei identischen Monomerbausteinen durch ein abweichendes stöchiometrisches Verhältnis der Monomeren voneinander unterscheiden.

6. Verfahren nach einem der Ansprüche 1 bis 5, **dadurch gekennzeichnet, daß** als Homo- und Copolyester solche eingesetzt werden, die im wesentlichen ausschließlich aus Ester-Struktureinheiten aufgebaut sind.

7. Verfahren nach einem der Ansprüche 1 bis 6, **dadurch gekennzeichnet, daß** die Umsetzung unter Zusatz von $\alpha$-Hydroxycarbonsäuren durchgeführt wird.

8. Verfahren nach Anspruch 7, **dadurch gekennzeichnet, daß** als $\alpha$-Hydroxycarbonsäuren Glykol- oder Milchsäure eingesetzt werden.

9. Verfahren nach einem der Ansprüche 1 bis 6, **dadurch gekennzeichnet, daß** keine weiteren Komponenten zugesetzt werden.

10. Biologisch abbaubare Blockcopolyester bestehend aus $\alpha$-Hydroxycarbonsäuren **dadurch gekennzeichnet, daß** sie gemäß dem Verfahren nach einem der Ansprüche 1 bis 9 herstellbar sind.

11. Blockcopolyester nach Anspruch 10, **dadurch gekennzeichnet, daß** sie in halogenierten Kohlenwasserstoffen und/oder Dimethylformamid und/oder Dimethylacetamid eine Löslichkeit von mindestens 50 g/l aufweisen.

12. Blockcopolyester nach einem der Ansprüche 10 oder 11, **dadurch gekennzeichnet, daß** sie eine Blockanzahl von 3 bis 10 aufweisen.

13. Verwendung der biologisch abbaubaren Blockcopolyestern nach einem der Ansprüche 10 bis 12 als Trägermaterialien in parenteralen Arzneistoffabgabesystemen mit retardierter bzw. kontrollierter Wirkstofffreisetzung in der Human- und Veterinärmedizin.

**Claims**

1. Process for the preparation of biodegradable block copolyesters, **characterized in that** two or more different biodegradable homopolyesters and/or copolyesters are reacted together by mixing for between 15 minutes and 5 hours in the melt and under an inert gas atmosphere, without the addition of chain linking substances.

2. Process according to Claim 1, **characterized in that** the homopolyesters and copolyesters are used in amounts

of 5 to 95 mol% in each case, based on the total mixture.

3. Process according to Claim 1 or 2, **characterized in that** the homopolyesters and/or copolyesters are mixed at temperatures in the range 130 to 230°C.

4. Process according to one of Claims 1 to 3, **characterized in that** at least one random or non-random copolyester is used.

5. Process according to one of Claims 1 to 4, **characterized in that** at least two different copolyesters are reacted which differ from one another in the type of monomer units or, if the monomer units are identical, in the stoichiometric ratio of the monomers.

6. Process according to one of Claims 1 to 5, **characterized in that** the homopolyesters and copolyesters used are essentially composed exclusively of ester structural units.

7. Process according to one of Claims 1 to 6, **characterized in that** the reaction is carried out with the addition of α-hydroxycarboxylic acids.

8. Process according to Claim 7, **characterized in that** glycolic or lactic acid is used as the α-hydroxycarboxylic acid.

9. Process according to one of Claims 1 to 6, **characterized in that** no other components are added.

10. Biodegradable block copolyesters composed of α-hydroxycarboxylic acids, **characterized in that** they are prepared by the process according to one of Claims 1 to 9.

11. Block copolyesters according to Claim 10, **characterized in that** they have a solubility of at least 50 g/l in halogenated hydrocarbons and/or dimethylformamide and/or dimethylacetamide.

12. Block copolyesters according to one of Claims 10 or 11, **characterized in that** the number of blocks is 3 to 10.

13. Use of the biodegradable block copolyesters according to one of Claims 10 to 12 in human and veterinary medicine as excipients in parenteral drug delivery systems with retarded or controlled release of the active ingredient.

## Revendications

1. Procédé pour la préparation d'un polyester séquencé biodégradable **caractérisé en ce que** deux homo- et/ou copolyesters diversement biodégradables sont mélangés l'un à l'autre sans addition de substances réticulantes a l'état fondu et sous atmosphère d'un gaz inerte par mélange pendant 15 minutes jusqu'à 5 heures.

2. Procédé selon la revendication 1, **caractérisé en ce que** les homo- et copolyesters sont utilisés en quantités à chaque fois de 5 à 95% en moles en se rapportant à la totalité du mélange.

3. Procédé selon la revendication 1 ou 2, **caractérisé en ce que** les homo et/ou copolyesters sont mélangés à des températures comprises entre 130 et 230°C.

4. Procédé selon l'une des revendications 1 à 3 **caractérisé en ce qu'**au moins un copolyester statistique ou non statistique est utilisé.

5. Procédé selon l'une des revendications 1 à 4, **caractérisé en ce qu'**au moins deux copolyesters différents sont transformée, qui se différencient l'un de l'autre par le type des blocs monomères ou bien pour des blocs monomères identiques, par une proportion stoechiométrique différente des monomères.

6. Procédé selon l'une des revendications 1 à 5, **caractérisé en Ce qu'**en tant qu'homo- et copclyester, on utilise ceux qui sont formés en principe exclusivement d'unités de structure d'esters.

7. Procédé selon l'une des revendications 1 à 5, **caractérisé en ce que** la transformation est accomplie avec addition d'acide α-hydroxycarboxylique.

8. Procédé selon la revendication 7, **caractérisé en ce qu'**en tant qu'acides α-hydroxycarboxyliques, on utilise l'acide glycolique ou lactique.

9. Procédé selon l'une des revendications 1 à 6, **caractérisé en ce qu'**aucun autre composant n'est ajouté,

10. Copolyesters séquencés biodégradables se composant d'acides α-hydroxycarboniques **caractérisés en ce qu'**ils peuvent être préparés selon le procédé de l'une des revendications 1 à 9.

11. Copolyesters séquences selon la revendication 10, **caractérisés en ce qu'**ils présentent, dans des hydrocarbures halogénés et/ou du diméthylforinamide et/ou du diméthylacétamide, une solubilité d'au moins 50 g/l.

12. Copolyesters séquencés selon l'une des revendications 10 ou 11, **caractérisés en ce qu'**ils présentent un nombre de blocs de 3 à 10.

13. Utilisation des copolyesters séquencés biodégradables selon l'une des revendications 10 à 12 en tant que matériaux de support dans des systèmes de distribution d'un médicament par voie parentérale avec libération retardée ou respectivement contrôlée de l'agent actif en médecine humaine et vétérinaire.